Europäisches Patentamt

European Patent Office

Office européen des brevets

(11) Numéro de publication : **0 497 721 A2**

# (12) DEMANDE DE BREVET EUROPEEN

(21) Numéro de dépôt : **92460004.2**

(22) Date de dépôt : **31.01.92**

(51) Int. Cl.⁵ : **E04H 13/00**

(30) Priorité : **31.01.91 FR 9101116**

(43) Date de publication de la demande :
**05.08.92 Bulletin 92/32**

(84) Etats contractants désignés :
**AT BE CH DE DK ES FR GB GR IT LI LU MC NL PT SE**

(71) Demandeur : **Chaigne, Jean-Claude
Le Treuil, Rue de Treuil
F-24350 Tocane Saint Apre (FR)**

(72) Inventeur : **Chaigne, Jean-Claude
Le Treuil, Rue de Treuil
F-24350 Tocane Saint Apre (FR)**

(74) Mandataire : **Le Faou, Daniel et al
Cabinet Regimbeau 11, rue Franz Heller,
Centre d'Affaires Patton B.P. 19107
F-35019 Rennes Cédex (FR)**

(54) **Procédé de fabrication d'un caveau ou d'un élément de caveau funéraire, et caveau ainsi obtenu.**

㊗    L'invention concerne un procédé de fabrication d'un caveau ou d'un élément de caveau funéraire (6), qui a la forme d'un caisson sensiblement parallélépipèdique rectangle ouvert à sa partie supérieure. Ce procédé comprend les étapes qui consistent à :
   a) appliquer sur un moule (1) de forme complémentaire de celle du caveau ou de l'élément de caveau, un enduit d'enrobage gélifié (2) ;
   b) projeter sur ledit enduit une résine synthétique durcissable (3), chargée en fibres de verre ;
   c) fixer horizontalement sur la résine, en vis-à-vis des faces latérales du moule, une série de poutrelles (4, 4', 4") ;
   d) renouveler les étapes a) et b), y compris sur les poutrelles.
   L'invention concerne également le caveau funéraire ainsi obtenu.
   Matériel funéraire.

FIG.1

La présente invention concerne un procédé de fabrication d'un caveau ou d'un élément de caveau funéraire.

Elle concerne également un caveau formé d'un ou plusieurs éléments obtenus par la mise en oeuvre de ce procédé.

Par les termes "caveau" et "élément de caveau", on entendra, dans la présente description, un caisson sensiblement parallélépipèdique rectangle ouvert à sa partie supérieure et destiné à recevoir au moins un cercueil. On entendra également un caisson de plus petite dimension destinée à recevoir une urne cinéraire.

Un caveau peut être formé d'un ou de plusieurs éléments en forme de caisson disposés les uns sur les autres, ou d'un caisson de larges dimensions comportant plusieurs compartiments.

La plupart des caveaux utilisés actuellement sont réalisés dans des matériaux classiques tels que le béton et le ciment. Ceux-ci présentent un certain nombre d'inconvénients. En effet, ces caissons sont lourds et ils résistent très peu aux infiltrations d'eau ainsi qu'aux fortes pressions dues par exemple à des glissements de terrain.

C'est pourquoi on a proposé des caveaux en matériaux composites synthétiques plus légers et résistants assez bien aux déformations et infiltrations d'eau.

Des caveaux de ce type sont décrits par exemple dans les documents DE-U-1 937 076 et FR-A-2 597 658. Ce dernier document a pour objet un caveau monobloc en matière synthétique, fabriqué par extrusion soufflage. Sur ses parois longitudinales sont prévus des tubes verticaux qui sont destinés à être remplis de béton armé servant à alourdir le caveau et à l'ancrer au sol pour éviter qu'il ne remonte.

A cet égard, il convient de rappeler qu'un problème très aigu rencontré pour ce type de construction est celui de la remontée à terme du caveau. Dans certains terrains à sol spongieux, le caveau est complètement entouré d'eau et est soumis à des forces considérables dues à la poussée d'Archimède, qui tendent à déterrer le caveau. Ceci est bien entendu très désagréable et source de conflit entre la famille du défunt, le fabricant et/ou l'installateur du caveau. Malheureusement, ces tubes verticaux n'assurent que partiellement leur fonction puisqu'ils sont disposés verticalement c'est-à-dire dans la même direction que la poussée d'Archimède. Si celle-ci est très importante, la remontée du caveau s'opère. En outre, la mise en oeuvre de ce caveau nécessite un travail supplémentaire important comprenant la fourniture et le coulage de béton. La présente invention permet de remédier à ces inconvénients.

Son principal objectif est de fournir un procédé qui permet d'obtenir un caveau parfaitement ancré au sol, c'est-à-dire qui n'est pas sujet à remontée même en cas de fortes pressions.

Un autre obectif est de fournir un caveau solide tout en étant léger.

Un autre but de l'invention est de permettre la mise en place du caveau sans avoir à effectuer d'autres opérations fastidieuses.

Un autre objectif de l'invention est de fournir un procédé de fabrication simple à mettre en oeuvre et peu coûteux.

Le procédé objet de l'invention est principalement caractérisé en ce qu'il comprend les étapes qui consistent à :

a) appliquer sur un moule de forme complémentaire de celle du caveau de l'élément de caveau, un enduit d'enrobage gélifié ;

b) projeter sur ledit enduit une résine synthétique durcissable, chargée en fibres de verre ;

c) fixer horizontalement sur la résine, en vis-à-vis des faces latérales du moule, une série de poutrelles ;

d) renouveler les étapes a) et b), y compris sur les poutrelles.

Selon d'autres caractéristiques avantageuses mais non limitatives de ce procédé :

– on fixe également des poutrelles horizontales en vis-à-vis des faces d'extrémité du moule ;

– on fixe également des poutrelles en vis-à-vis de la face supérieure du moule qui correspond à la paroi de fond du caveau ou de l'élément de caveau, ces poutrelles étant parallèles les unes aux autres et disposées transversalement ;

– on utilise un moule dont la face supérieure, qui correspond à la paroi de fond du caveau ou de l'élément de caveau, comporte une surépaisseur de même forme que ladite face mais de dimensions plus réduites, lesdits enduits et résines n'étant pas appliqués sur cette surépaisseur de façon à réaliser un caveau dont le fond est partiellement ouvert ;

– à l'étape c) on utilise des poutrelles qui présentent, a proximité de leurs extrémités, un trou dirigé verticalement, les trous des différentes séries de poutrelles étant en regard les uns des autres.

L'invention concerne également un caveau funéraire.

Selon une caractéristique de l'invention, ce caveau, en matériau léger, tel qu'une résine de polyester ou similaire, qui a la forme générale d'un caisson parallélépipèdique rectangle, est pourvu, au moins sur ses deux grandes faces latérales, d'une série de nervures longitudinales faisant saillie vers l'extérieur.

Avantageusement, les faces d'extrémité du caisson possèdent également des nervures en saillie vers l'extérieur.

De préférence, les nervures des faces latérales sont disposées au même niveau que les nervures des faces d'extrémité.

Selon une caractéristique importante de l'invention le caveau est formé d'un seul élément obtenu par le procédé décrit plus haut.

Selon une autre caractéristique, le caveau est formé de plusieurs éléments superposés, l'élément inférieur présentant un fond plein alors que les éléments supérieurs présentent un fond partiellement ouvert.

Selon d'autres caractéristiques :

– les éléments sont fixés les uns aux autres par un joint d'assemblage en résine synthétique durcissable.

– le caveau comporte une série de tuyaux verticaux engagés dans les trous des poutrelles ;

– l'élément supérieur comporte un couvercle pourvu d'une ouverture centrale, lequel est adapté pour recevoir une plaque d'obturation.

D'autres caractéristiques de l'invention apparaîtront à la lecture de la description détaillée qui va suivre, faite en référence aux dessins annexés dans lesquels :

– la figure 1 est une vue de face en coupe d'un élément de caveau en place sur un moule ;

– la figure 2 est également une vue de face en coupe d'un élément de caveau en place sur un moule, cet élément de caveau étant dépourvu de fond ;

– la figure 3 est une vue en perspective d'un élément de caveau équipé de tuyaux de circulation d'eau ;

– la figure 4 est une vue de face en coupe d'un caveau formé de deux éléments superposés ;

– la figure 5 est une vue de détail d'une poutrelle de jonction entre deux éléments de caveau adjacents ;

– la figure 6 est une vue en coupe de la partie haute d'un élément de caveau disposé à proximité d'une dalle funéraire.

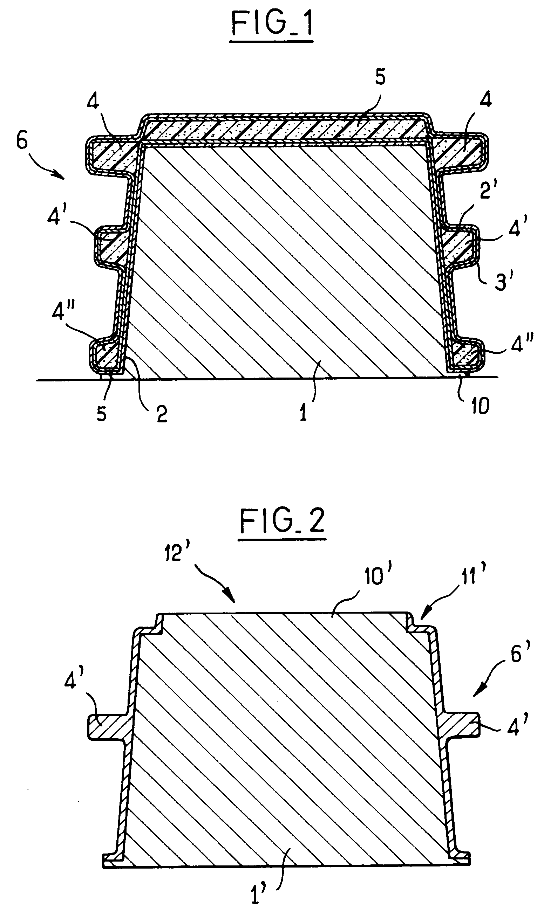

Le procédé objet de l'invention sera plus particulièrement décrit en référence aux figures 1 et 2 annexées.

Sur la figure 1 est représenté un moule 1 par exemple en métal ou en matière plastique. Ce moule a une forme générale qui est sensiblement parallélépipèdique rectangle. Elle correspond à la forme du caveau ou de l'élément de caveau que l'on souhaite obtenir. De préférence les faces périphériques de ce moule sont légèrement inclinées de sorte que la section droite de ce moule a la forme d'un trapèze isocèle. A titre d'exemple, la face supérieure du moule présente une largeur de 900 mm, tandis que sa face inférieure à une largeur de 902 mm. La base du moule 1 qui repose à terre présente un rebord 10.

Cette forme en dépouille facilite le démoulage et autorise un léger emboîtement des éléments empilés lorsqu'on a affaire à un caveau à plusieurs places, comme cela sera expliqué plus loin.

Selon une caractéristique du procédé de l'invention, on applique sur ce moule un enduit d'enrobage gélifié. Par une telle expression on entend le produit couramment désigné par le terme anglo-saxon "gel coat". Cet enduit est par exemple à base de polyester isophtalique. Il est de préférence appliqué au pistolet sur une épaisseur d'environ 460 micromètres.

Un tel enduit est destiné à favoriser l'accrochage de la résine qui sera projetée ultérieurement et de faciliter le démoulage de l'élément de caveau.

Ainsi, dans la seconde étape du procédé, on projette sur l'enduit 2 une résine synthétique durcissable 3 chargée en fibres de verre. De préférence cette résine est du type de celle utilisée pour la réparation des carrosseries automobiles. Il s'agit par exemple d'une résine de polyester à laquelle on rajoute des fibres de verre, un durcisseur et un réacteur. Cette résine est projetée le plus régulièrement possible sur toute la surface du moule jusqu'à l'obtention d'une épaisseur d'environ 3 mm.

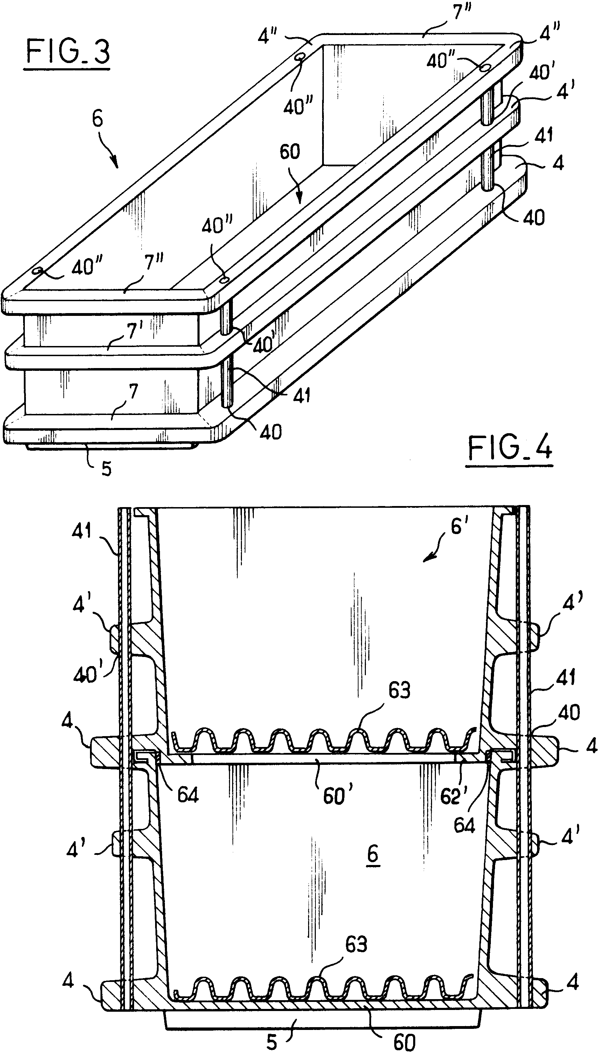

Lorsque la résine s'est solidifiée, on procède à la fixation d'une série de poutrelles sur celle-ci. Ainsi, comme le montre la figure 1 on a fixé en vis-à-vis des faces latérales du moule 1, des poutrelles 4, 4', 4", qui sont en regard les unes des autres. Bien que cela n'apparaisse pas sur la figure, des poutrelles du même type que celles représentées sont également fixées en vis-à-vis des faces d'extrémités du moule c'est-à-dire au niveau de ses petites faces avant et arrière. Elles portent les références 7, 7' et 7" à la figure 3. Elles y sont fixées au même niveau que les poutrelles 4, 4', 4" de sorte que le moule est ceinturé par trois familles de poutrelles.

Bien entendu, ces poutrelles présentent des extrémités découpées en onglet pour permettre leur assemblage les unes aux autres aux angles du moule, sans discontinuité.

Ainsi que le montre également la figure 1, des poutrelles 5 sont fixées en vis-à-vis du fond du moule, ces poutrelles sont disposées parallèlement les unes aux autres et transversalement par rapport au grand axe du moule.

La fixation de ces poutrelles se fait par exemple au moyen d'une colle. Il peut s'agir d'une colle à base de polyuréthane.

On remarque que les poutrelles 4 (et 7) ont une section plus grande que celle des poutrelles 4' et 4". Leur largeur à la base est par exemple de 100 mm. Elle est de 80 mm à leur sommet pour une longueur de 120 mm. L'ensemble de ces poutrelles a une section en forme générale de trapèze isocèle, dont la base se raccorde à la résine déjà appliquée sur le moule par des parties arquées. Ceci facilite l'application ultérieure d'enduit et de résine, comme on le verra plus loin.

On comprendra plus loin dans la description la fonction de ces poutrelles.

Dans une variante de réalisation, le caveau présente des poutrelles seulement sur les parois latérales.

Les étapes suivantes du procédé de l'invention consistent à renouveler les étapes consistant à appliquer à nouveau de l'enduit et de la résine. Ces opérations s'effectuent successivement et ces produits sont répandus y compris sur les poutrelles précédemment posées. Les parties arquées des poutrelles facilitent l'étalement de l'enduit et de la résine. Les poutrelles, recouvertes d'enduit et de résine, constituent des nervures qui font saillie vers l'extérieur.

Lorsque la résine a effectué sa prise, on peut alors démouler le caveau.

Le moule l'représenté à la figure 2 a le même aspect général que le moule 1. Toutefois, sa face supérieure 12' présente une surépaisseur 10' qui a la même forme que cette face supérieure mais présente des dimensions légèrement inférieures. Ainsi, cette surépaisseur est bordée d'un pourtour référencé 11'. Les opérations du procédé décrites en référence à la figure 1 sont répétées sur ce moule. Toutefois, l'enduit et la résine ne sont pas appliqués sur la face supérieure de la surépaisseur 10' mais simplement sur le pourtour 11'. Comme le montre la figure 2, des poutrelles 4' ont été fixées sur la résine (de même que des poutrelles 7'). On notera que sur cette figure, les différentes couches d'enduit et de résine ainsi que les poutrelles n'ont pas été différenciées les unes des autres. Ainsi qu'on le comprend aisément, l'élément de caveau obtenu à l'aide de ce moule 1' est dépourvu de fond.

L'élément de caveau représenté à la figure 3 a été obtenu à l'aide du moule 1. Les poutrelles fixées au niveau de ses faces d'extrémité avant et arrière sont répertoriées 7, 7' et 7". Dans l'exemple représenté, les poutrelles 4, 4' et 4" présentent non loin de leurs extrémités un trou désigné 40, 40', 40". Les trous des différentes poutrelles sont disposés en regard les uns des autres et reçoivent par emboîtement un tube 41 par exemple en chlorure de polyvinyle. Ce tube creux qui débouche à sa partie haute et à sa partie basse est collé par exemple avec de la colle à base de polyuréthane au niveau de chaque poutrelle.

L'élément de caveau tel qu'il est représenté ici peut être utilisé seul pour l'inhumation d'un corps.

Il est toutefois possible grâce aux éléments obtenus par le procédé de la présente invention d'obtenir un caveau pouvant recevoir plusieurs cercueils.

Un tel caveau est obtenu de préférence par superposition de plusieurs éléments, comme le montre la figure 4. Avantageusement, cet assemblage s'effectue en usine. Sur cette figure, le caveau comporte deux éléments superposés 6 et 6'.

L'élément de caveau 6 présente un fond plein et est obtenu à partir d'un moule 1 alors que l'élément supérieur 6' a un fond partiellement ouvert et est, quant à lui, obtenu à l'aide du moule 1'.

Les deux éléments de caveau sont fixés l'un à l'autre à l'aide d'un joint de soudure en résine 64.

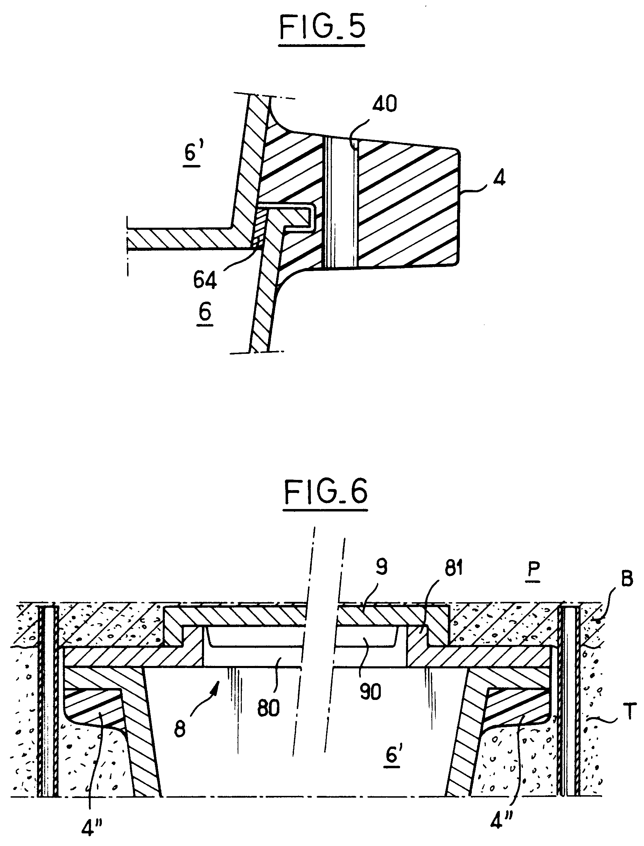

Au niveau de la jonction de ces deux éléments de caveau est fixée, après leur assemblage, une série de poutrelles 4 et 7 (seule la poutrelle 4 est visible) qui a pour fonction de masquer cette zone d'assemblage, tout en la renforçant (figure 5).

Des trous 40, 40' sont prévus dans les poutrelles 4 et 4' qui équipent ce caveau à deux places. Ceux-ci reçoivent un tuyau 41 qui s'étend sur toute la hauteur du caveau et débouche sensiblement à sa partie supérieure.

Au fond de chacun des éléments 6 et 6' est disposée une plaque rigide ondulée 63 appelée "repose-cercueil". La plaque ondulée qui équipe l'élément 6' repose sur le pourtour 62' qui entoure l'ouverture 60' de son fond.

Sur la figure 4, seuls deux éléments de caveau ont été représentés. Toutefois il est bien entendu possible de réaliser un caveau à trois ou quatre places par superposition de plusieurs éléments de caveau 6'.

Comme le montre la figure 6, l'élément de caveau supérieur 6' qui sera le plus près de la surface de la terre est équipé de poutrelles 4" de petite taille disposées juste en-dessous de son rebord supérieur.

Cet élément de caveau reçoit un couvercle 8, par exemple en polyester, qui présente une ouverture centrale rectangulaire 80. Cette ouverture est entourée d'un rebord vertical 80. Sur ce rebord s'appuie une plaque d'obturation 9 également en polyester dont la face inférieure est munie de nervures de rigidification 90. Ces nervures vont permettre de pouvoir supporter sans dommages particuliers le poids important de la pierre tombale $\underline{P}$ qui équipe la sépulture. Bien entendu l'entourage du couvercle 8 et de la plaque 9 est comblé à l'aide de béton $\underline{B}$ disposé au-dessus de la terre $\underline{T}$.

Les nervures qui équipent les parois des éléments de caveau de la présente invention et dont les poutrelles sont le principal élément constitutif ont pour première fonction de renforcer ces parois et ainsi de permettre au caveau de résister aux fortes pressions exercées par la terre dans laquelle il a été enfoui.

Toutefois, la fonction principale de ces nervures est d'améliorer l'ancrage du caveau au sol. En effet, après mise en place du caveau dans une fosse, on comble de terre l'espace compris entre les parois du caveau et les parois de la fosse et cette terre vient s'insérer entre les nervures formées par les poutrelles. Après tassement, on obtient ainsi une liaison parfaite, ces nervures constituant des éléments d'ancrage extrêmement efficaces s'opposant à la remontée du caveau. Cet ancrage est d'autant plus efficace que les poutrelles s'étendent sensiblement horizontalement alors que la poussée d'Archimède a une direction verticale.

Les poutrelles 5 qui équipent la face inférieure de l'élément de caveau 6 ont pour fonction de permettre le passage de l'eau présente sous le caveau de part et d'autre de celui-ci. Ainsi, l'eau se répartit uniformément sous le caveau et les efforts encaissés par le caveau sont régulièrement répartis.

Cette eau a tendance à rentrer à l'intérieur des tuyaux 41 pour remonter jusqu'à la surface de la pierre tombale <u>P</u>. De cette façon on diminue encore considérablement les efforts que le caveau doit encaisser, les tuyaux ayant un rôle de décompression de l'eau emprisonnée entre le caveau et le fond de la fosse où il est mis en place.

On notera que la forme particulière ondulée des plaques 63 permet de recueillir les liquides qui, inévitablement coulent, du corps inhumé. Cet écoulement a une durée maximale d'un mois et le volume de ce "bac de rétention" est largement suffisant. Par la suite des évents non représentés permettent d'obtenir l'assèchement de ces plaques.

De préférence, la nature de l'enduit 2 utilisé pour la fabrication de l'élément de caveau sera choisi de telle manière qu'elle puisse rester à tous les produits médicamenteux ou chimiques qui s'échapperaient du corps inhumé.

A titre simplement indicatif le poids d'un caveau d'une place est d'environ 48 kg soit, pour un caveau à trois places, environ 144 kg.

Bien entendu, il est possible de concevoir un caveau à plusieurs places où les cercueils seront disposés les uns à côtés des autres. Pour ce faire, il faut prévoir un élément de caveau de dimensions adaptées qui présente des cloisons longitudinales de séparation.

Le procédé décrit plus haut peut être appliqué à la réalisation d'un caveau destiné à recevoir une urne cinéraire et servant d'élément de colombarium.

Un tel caveau aura des dimensions sensiblement plus faibles qu'un caveau traditionnel, et en conséquence des tubes de décompression ne seront pas généralement nécessaires.

**Revendications**

1. Procédé de fabrication d'un caveau ou d'un élément de caveau funéraire (6, 6'), qui a la forme d'un caisson sensiblement parallélépipèdique rectangle ouvert à sa partie supérieure, caractérisé en ce qu'il comprend les étapes qui consistent à :

    **a)** appliquer sur un moule (1) de forme complémentaire de celle du caveau ou de l'élément de caveau, un enduit d'enrobage gélifié (2) :
    **b)** projeter sur ledit enduit une résine synthétique durcissable (3), chargée en fibres de verre ;
    **c)** fixer horizontalement sur la résine, en vis-à-vis des faces latérales du moule, une série de poutrelles (4, 4', 4'') ;

    **d)** renouveler les étapes **a)** et **b)**, y compris sur les poutrelles.

2. Procédé selon la revendication 1, caractérisé en ce que préalablement à l'étape **d)**, on fixe également des poutrelles horizontales (7, 7', 7'') en vis-à-vis des faces d'extrémité du moule.

3. Procédé selon l'une des revendications 1 et 2, caractérisé en ce que, à l'étape **c)**, on utilise des poutrelles (4, 4', 4'') qui présentent, à proximité de leurs extrémités, un trou (40) dirigé verticalement, les trous des différentes séries de poutrelles étant en regard les uns des autres.

4. Procédé selon l'une des revendications 1 à 3, caractérisé en ce que, prélablement à l'étape **d)**, on fixe également des poutrelles (5) en vis-à-vis de la face supérieure du moule qui correspond à la paroi de fond du caveau ou de l'élément de caveau, ces poutrelles étant parallèles les unes aux autres et disposées transversalement.

5. Procédé selon l'une des revendications 1 à 3, caractérisé en ce qu'on utilise un moule (1') dont la face supérieure (12') qui correspond à la paroi de fond du caveau ou de l'élément de caveau, comporte une surépaisseur (10') de même forme que ladite face, mais de dimensions plus réduites et en ce que lesdits enduit (2) et résine (3) ne sont pas appliqués sur cette surépaisseur (10'), de façon à réaliser un caveau dont le fond est partiellement ouvert.

6. Caveau funéraire en matériau léger, tel qu'une résine a base de polyester ou similaire, qui comprend au moins un caisson (6, 6') de forme générale parallélépipèdique rectangle, caractérisé par le fait que ce caisson (6) est pourvu, au moins sur ses deux grandes faces latérales, d'une série de nervures longitudinales faisant saillie vers l'extérieur.

7. Caveau funéraire selon la revendication 6, caractérisé en ce que les faces d'extrémité du caisson (6) possèdent également des nervures en saillie vers l'extérieur.

8. Caveau funéraire selon les revendications 6 et 7 prises en combinaison, caractérisé en ce que les nervures des faces latérales sont disposées au même niveau que les nervures des faces d'extrémité.

9. Caveau funéraire selon l'une des revendications 6 à 8, caractérisé par le fait qu'il est formé d'un seul élément (6) obtenu par la mise en oeuvre du procédé selon l'une des revendications 1 à 4.

**10.** Caveau funéraire selon l'une des revendications 6 à 8, caractérisé en ce qu'il est formé de plusieurs éléments superposés, l'élément inférieur (6) étant obtenu par la mise en oeuvre du procédé selon l'une des revendications 1 à 4 tandis que les éléments supérieurs (6') présentent un fond partiellement ouvert et sont obtenus par la mise en oeuvre du procédé selon la revendication 5.

**11.** Caveau funéraire selon la revendication 10, caractérisé en ce que lesdits éléments sont fixés les uns aux autres par un joint d'assemblage (64) en résine durcissable.

**12.** Caveau funéraire selon l'une des revendications 9 à 11, caractérisé en ce qu'il comporte une série de tuyaux verticaux (41) engagés dans les trous (40) desdites poutrelles (4, 4', 4").

**13.** Caveau funéraire selon l'une des revendications 9 à 12, caractérisé en ce que l'élément supérieur (6, 6') comporte un couvercle (8) pourvu d'une ouverture centrale (80), lequel est adapté pour recevoir une plaque d'obturation (9).

## FIG_1

## FIG_2

FIG. 3

FIG. 4

## FIG_5

## FIG_6